# EUROPÄISCHE PATENTSCHRIFT

(11) **EP 1 503 848 B1**
(45) Veröffentlichungstag und Bekanntmachung des Hinweises auf die Patenterteilung: **13.02.2008**
(21) Anmeldenummer: 03727343.0
(22) Anmeldetag: 23.04.2003
(51) Int. Cl.: B01D 65/02, B01D 65/08, B01D 63/04, B01D 63/02, B01D 61/20, C02F 3/12, C02F 3/06, C02F 1/44

(54) **HOHLFASERMEMBRAN-FILTRATIONSVORRICHTUNG UND DEREN VERWENDUNG BEI DER REINIGUNG VON ABWASSER SOWIE MEMBRANBIOREAKTOR**
HOLLOW-FIBRE MEMBRANE FILTRATION DEVICE AND USE THEREOF FOR PURIFYING WASTE WATER AND MEMBRANE BIOREACTOR
DISPOSITIF DE FILTRATION A MEMBRANES SOUS FORME DE FIBRES CREUSES ET SON UTILISATION POUR LA PURIFICATION D'EAUX USEES, AINSI QUE BIOREACTEUR A MEMBRANES

(30) Priorität: 10.05.2002 DE 10220916
(43) Veröffentlichungstag der Anmeldung: 09.02.2005
(73) Patentinhaber: SFC Umwelttechnik GmbH, 5020 Salzburg (AT)
(72) Erfinder: DEMOULIN, Gunnar, A-5026 Salzburg (AT)
(74) Vertreter: Tomerius, Isabel
(86) Internationale Anmeldenummer: PCT/EP2003/004224
(87) Internationale Veröffentlichungsnummer: WO 2003/095077

(56) Entgegenhaltungen:
- WO-A-97/06880
- DE-C- 10 045 227
- DE-C- 19 734 759
- JP-A- 2001 087 630
- US-A- 4 610 789
- US-B1- 6 214 231
- DATABASE WPI Week 199320 Derwent Publications Ltd., London, GB; AN 1993-163696 XP002252007 & JP 05 096136 A (TORAY IND INC), 20. April 1993 (1993-04-20)

## Beschreibung

Die Erfindung betrifft eine Filtrationsvorrichtung zum Abtrennen von Partikeln aus einer Flüssigkeit mittels Hohlfasermembranen, die zu einem Faserbündel zusammengefasst sind. Diese Filtrationsvorrichtung sowie ein Filtrationsmodul, in welchem mehrere der Filtrationsvorrichtung zusammengefasst sind, eignen sich insbesondere zum Abtrennen von Biomasse aus Wasser oder Abwasser. Die Erfindung betrifft weiterhin einen Membranbioreaktor und ein Verfahren zur (Ab)wasseraufbereitung.

Der Einsatz von Membranfiltern zum Aufreinigen von Wasser oder Abwasser ist grundsätzlich bekannt. Die zur Filtration eingesetzten porösen Materialien bestehen beispielsweise aus Keramik oder Polymermembranen, z.B. aus Polyethylen, Polypropylen, Polyethersulfon oder ähnlichem. Je nach Einsatzgebiet können die Porengrößen der Membran im Bereich zwischen 0,001 und 1 µm liegen.

Bei der Membranfiltration werden grundsätzlich drei unterschiedliche Betriebsarten unterschieden, nämlich "Dead end", "Crossflow" und "Submerged".
Mit "Dead end" werden solche Anwendungen bezeichnet, bei denen die zu reinigende Flüssigkeit ohne weitere Zirkulation in einem Batch-Betrieb durch die Membran gedrückt wird. Dabei lagern sich die von der Membran zurückgehaltenen Partikel auf der Membran ab und führen im Laufe der Betriebszeit zu Verblockungen oder Aufwüchsen auf der Membran. Im Laufe der Betriebszeit muss daher für gleichbleibenden Durchsatz der Druck erhöht werden, oder umgekehrt geht bei gleichbleibendem Druck der Durchsatz zurück. Für den großtechnischen Einsatz im Bereich kontinuierlicher Anlagen zur Trinkwasser- oder Abwasseraufbereitung ist dieses Filtrationsverfahren daher nicht geeignet.

Beim "Crossflow"-Verfahren wird die zu reinigende Flüssigkeit im Kreislauf an der Membranoberfläche entlang geführt und aufgrund des Differenzdrucks zwischen dieser Membranseite und der gegenüberliegenden Seite der Membran durch die Membran hindurchgedrückt, wobei die abzutrennenden Partikel zurückgehalten werden. Dieses Verfahren erfordert Differenzdrücke von deutlich über 500 mbar. Außerdem ist es erforderlich, zum Ablösen der sich auf der Membran bildenden Ablagerungen einen großen Anteil noch nicht gereinigter Flüssigkeit zu rezirkulieren. Dies verursacht erhebliche Betriebskosten.

Im "Submerged"-Verfahren wird die Membran in die zu reinigende Flüssigkeit eingetaucht, und im Falle von Hohlfasermembranen wird im Unterdruckprinzip Permeat von außen in das Innere der Hohlfaser gezogen und im Inneren der Hohlfaser abgeleitet. Der Differenzdruck zwischen dem Membranäußeren und dem Membraninneren ist hier jedoch deutlich geringer als im Fall der "Crossflow"-Filtration.

Beim Einsatz der Membranfiltration zur Behandlung von Wasser oder Abwasser wird üblicherweise das "Submerged"-Verfahren eingesetzt, bei welchem die Membran in die zu reinigende Flüssigkeit eingetaucht wird. Ein Problem beim Einsatz von Membranfiltern auf dem Gebiet der Abwasserreinigung besteht dabei darin, dass sich durch sogenanntes "Fouling" oder "Bio-Fouling" auf der Membran Belege bilden oder das Ausfällen chemischer Substanzen ("Scaling") zu Ablagerungen auf den Membranen führt. Es wurden daher bereits unterschiedliche Verfahren und Anordnungen vorgeschlagen, um die Membranen von diesen Ablagerungen zu befreien.

Die US 6,214,231 B1 beispielsweise beschreibt eine Filtrationsanlage unter Verwendung von Hohlfasermembranen. Mehrere Hohlfasermembranen sind dabei zu einem im Wesentlichen in zylindrischen Faserbündel zusammengefasst Die oberen und die unteren Enden der Hohlfasermembranen sind jeweils in eine Haltevorrichtung eingebettet. Auf diese Weise wird ein Hohlfasermodul erhalten. Mehrere nebeneinander aufgestellte Filtrationsmodule ergeben eine Filtrationskassette, die in die zu reinigende Flüssigkeit eingestellt wird. Mit den Kassetten ist jeweils eine Permeat-Absaugleitung verbunden, die wiederum mit den oberen Haltern der Membranfilterbündel in Verbindung steht und aus dem Inneren der einzelnen Hohlfasermembranen die von den Partikeln gereinigte Flüssigkeit absaugt. Um die Hohlfasermembranen von Ablagerungen zu befreien, kann die Flussrichtung umgekehrt werden. Flüssigkeit wird also unter hohem Druck durch die Absaugleitung dem Inneren der Hohlfasermembranen zugeführt und tritt durch Letztere von Innen nach Außen durch, wobei die Ablagerungen auf der Membranoberfläche abgelöst werden. Ein derartiges Verfahren bedeutet jedoch eine Unterbrechung des normalen Filtrationsbetriebs und damit einen verminderten Durchsatz. Außerdem kann dieses Verfahren die Ablagerung von Verunreinigungen auf der Membran nicht verhindern, sondern diese bestenfalls nach ihrem Entstehen beseitigen.

In der US 6,156,200 A werden ebenfalls Filtrationsmodule mit Hohlmembranfaser-Bündeln beschrieben, die in ihrem Aufbau grundsätzlich denjenigen der US 6,214,231 B1 entsprechen. Auch hier wird das Faserbündel vertikal in die zu reinigende Flüssigkeit eingestellt Die Halterung, in welche die unteren Enden der Hohlfasermembranen eingebettet sind, weist Gasauslassöffnungen auf, durch welche Gasblasen entlang dem Äußeren der Hohlfasermembranen nach oben aufsteigen und dabei einerseits die Bildung von Ablagerungen auf den Außenoberflächen der Membranen reduzieren und andererseits bereits gebildete Ablagerungen entfernen.

Eine ähnliche Anordnung ist auch in der WO 97/06880 A2 beschrieben. Hier ist außerdem erwähnt, dass eine besonders gute Reinigung dadurch erreicht werden könne, dass die Fasern zwischen fünf und zehn Prozent länger sind als der Abstand zwischen den Halterungen, in welchen die Faserenden eingebettet sind.

In der JP 2001-087630 A wird eine Filtrationskartusche beschrieben, die eine poröse Kernzone aufweist, in welche die zu filtrierende Flüssigkeit eingeleitet wird. Die durch den porösen Kern nach außen austretende Flüssigkeit wird mittels Hohlfasermembranen filtriert, welche kreuzweise um den porösen Kern herum gewickelt sind. Gereinigte Flüssigkeit wird aus dem Inneren der Hohlfasermembranen abgezogen. Eine Gaszufuhr findet nicht statt

Die beschriebenen Vorrichtungen zur Reinigung der Membranfasern mit Druckluft weisen den Nachteil auf, dass sehr große Mengen an Druckluft erforderlich sind, um eine wirkungsvolle Reinigung der Membranfasern zu gewährleisten. Die erhöhte Zufuhr an Druckluft in die zu reinigende Flüssigkeit kann jedoch andere Prozessparameter negativ beeinflussen, beispielsweise das Einhalten gegebener Sauerstoffsollwerte erheblich erschweren.
Nachteilig ist weiterhin, dass sich die anwendbaren Drücke auf maximal die hydrostatische Druckhöhe im Bereich der eingebrachten Faser beschränkt. Außerdem wird die Aufsteiggeschwindigkeit der Luftblasen nicht durch die eingebrachte Luftmenge, sondern durch die Grö-ße der entstehenden Blasen vorgegeben. Eine gezielte Regelung der Reinigungswirkung der Vorrichtungen ist daher grundsätzlich nicht möglich.

Genauso wenig gelingt eine gleichmäßige Verteilung der Lufteinwirkung entlang der Länge der Hohlfasermembranen. Über die Gesamtlänge der Fasern von meist ein bis zwei Metern ist eine gleichmäßige Reinigung mit den beschriebenen Systemen daher nicht möglich.

Die vorstehend genannten Veröffentlichungen beschreiben zudem lediglich im Allgemeinen die Anwendung von Hohlfasermembranen zur Abtrennung von Biomasse in Membranbioreaktoren. Das Augenmerk richtet sich dabei allein auf das Abtrennen vorhandener Biomasse, die als Biozynose aus den vorhandenen Nährstoffen unter den jeweiligen Umweltbedingungen entstanden ist. Die Mechanismen, welche die Ablagerungen auf den Membranoberflächen begünstigen, werden dabei jedoch nicht berücksichtigt.

Im Rahmen der Untersuchungen, die dieser Erfindung zugrunde liegen, wurde jedoch herausgefunden, dass bestimmte Umweltbedingungen einen erheblichen Einfluss auf die Trennleistung von Membranen ausüben. Insbesondere wurde festgestellt, dass bestimmte Umweltbedingungen den biologischen Aufwuchs auf der Membranoberfläche ("Bio-Fouling") und das Anhaften suspendierten Materials stark fördern. Ein Aspekt der Erfindung besteht daher auch darin, für solche Bedingungen im Filtrationsmedium zu sorgen, die das "Bio-Fouling" und Ablagerungen auf der Membranoberfläche reduzieren.

**Aufgabe** der Erfindung ist es entsprechend, eine Filtrationsvorrichtung anzugeben, welche einfach und platzsparend aufgebaut ist und über einen langen Zeitraum einen hohen Durchsatz aufrecht erhält. Insbesondere sollten sich dabei die in der Filtrationsvorrichtung vorhanden Hohlfasermembranen über ihre gesamte Länge mit einer möglichst geringen Gasmenge gleichmäßig reinigen lassen, und es sollten schließlich in einer Abwasserreinigungsvorrichtung Bedingungen geschaffen werden, welche die Bildung von Ablagerungen auf der Membranoberfläche von vom herein reduzieren.

Die Lösung der Aufgabe gelingt mit der Filtrationsvorrichtung gemäß Anspruch 1, welche Bestandteil des Filtrationsmoduls gemäß Anspruch 8 ist. Die Erfindung betrifft weiterhin die Verwendung der Filtrationsvorrichtung bzw. des Filtrationsmoduls gemäß 11 sowie ein Verfahren zur Aufbereitung von Wasser oder Abwasser gemäß Anspruch 12 sowie einen Membranbioreaktor gemäß Anspruch 23. Bevorzugte Ausführungsformen und Verfahrensvarianten sind den jeweiligen Unteransprüchen zu entnehmen.

In einem ersten Aspekt betrifft die Erfindung also eine Filtrationsvorrichtung zum Abtrennen von Partikeln aus einer Flüssigkeit mittels zu einem Faserbündel zusammengefasster Hohlfasermembranen. Die Hohlfasermembranen sind von außen nach innen von der Flüssigkeit durchströmbar, und die filtrierte Flüssigkeit wird aus wenigstens einem ihrer Enden abgezogen. Die Filtrationsvorrichtung weist zudem eine Gaszufuhrvorrichtung auf, um das Äußere der Hohlfasermembranen mit einem Gas zu umspülen. Teil der Gaszufuhrvorrichtung ist erfindungsgemäß ein Träger, dessen Außenumfangsfläche zumindest teilweise von innen nach au-ßen für das Gas durchlässig ist. Auf diese Außenumfangsfläche des Trägers ist das Faserbündel aufgewickelt An seinem stirnseitigen Ende weist der Träger einen Druckluftanschluss auf, durch welchen Gas in das Innere des Trägers zugeführt wird.

Diese Konstruktion der erfindungsgemäßen Filtrationsvorrichtung erlaubt einerseits eine platzsparende Anordnung und andererseits eine gleichmäßige Gaszufuhr entlang der Länge der Hohlfasermembranen. Durch die Verwendung des gasdurchlässigen Trägers und das Aufwickeln des Faserbündels auf die Außenumfangsfläche desselben befinden sich die Austrittsorte für das Gas stets in unmittelbarer Nähe der Außenoberflächen der Hohlfasermembranen. Damit ist eine gleichmäßige und unmittelbare Einwirkung des Gases auf die Membranoberflächen sichergestellt. Die Menge an zugeführtem Gas ist gering, so dass praktisch keine negativen Einflüsse aufgrund erhöhten Sauerstoffgehalts oder andere durch das Gas verursachte Störungen beobachtet werden.

Die Größe der austretenden Gasblasen kann auf einfache Weise durch die Ausgestaltung der Außenumfangsfläche des Trägers eingestellt werden. Beispielsweise kann die Außenumfangsfläche Durchgangsöffnungen in geeigneter Anzahl und Größe aufweisen. Löcher oder Schlitze in der Außenumfangsfläche sind ebenso geeignet wie eine gitter- oder skelettartige Ausgestaltung der Außenumfangsfläche. Je nach gewünschter Verteilung des Gasaustritts können die Durchgangsöffnungen im Bereich der gesamten Außenumfangsfläche oder nur in Teilbereichen vorhanden sein. Für eine besonders feine Verteilung der Gasblasen kann die Außenumfangsfläche auch ganz oder teilweise aus porösem Material bestehen. Die Auswahl des Material für den Träger und dessen Außenumfangsfläche ist nicht besonders beschränkt. Geeignet sind grundsätzlich alle Materialen, die im zu filtrierenden Medium und unter den Filtrationsbedingungen beständig sind, beispielsweise alle Arten geeigneter Kunststoffe. Auch Keramik oder metallische Materialen sind grundsätzlich einsetzbar.

Auch die Form des Trägers und die Formgebung der Außenumfangsfläche sind nicht auf besondere Formen festgelegt. Zum Umwickeln mit den Hohlfasermembranen besonders geeignet sind Außenumfangsflächen in Form eines Zylindermantels.

Die Größe des Trägers und dessen Außenumfangsfläche wird den Anwendungsbedingungen entsprechend angepasst. Für die Verwendung der erfindungsgemäßen Filtrationsvorrichtung in der Abwasserreinigung haben sich Außenumfangsflächen des Trägers mit einer Länge von 1 bis 100 cm, vorzugsweise 5 bis 70 cm, und ein Durchmesser von 1 bis 40 cm, vorzugsweise 5 bis 20 cm, als geeignet erwiesen.

Zum Einleiten des Gases weist der Träger an einem seiner stirnseitigen Enden einen Druckluftanschluss auf. Bevorzugt wird als Gas Druckluft verwendet. Für spezielle Anwendungen, beispielsweise die Filtration unter anaeroben Bedingungen, können auch andere Gase wie Stickstoff oder ähnliches eingesetzt werden.

Um die in der erfindungsgemäßen Filtrationsvorrichtung verwendeten Hohlfasermembranen zu einem Faserbündel zusammenzufassen, werden die Enden der Hohlfasermembranen zweckmäßig in wenigstens einem Anschlusskopf befestigt. Dieser weist zweckmäßig einen Sauganschluss auf, welcher mit einer Pumpe verbunden werden kann, um aus dem Inneren der Hohlfasermembranen gereinigte Flüssigkeit abzuziehen. Die Ausgestaltung des Anschlusskopfes und das Einbetten der Enden der Hohlfasermembranen können grundsätzlich wie aus dem Stand der Technik bekannt geschehen. Beispiele sind in den eingangs beschriebenen Druckschriften genannt

Erfindungsgemäß ist es möglich, beide Enden einer Hohlfasermembran im selben Anschlusskopf zu befestigen. Alternativ ist es ebenfalls möglich, die beiden Enden einer Hohlfasermembran in getrennten Anschlussköpfen einzubetten. In beiden Fällen der Befestigung erfolgt das Aufwickeln des Faserbündels auf die Außenumfangsfläche des Trägers zweckmäßig derart, dass alle Enden der Hohlfasermembranen zum Sauganschluss hin orientiert sind. Der Sauganschluss befindet sich dabei zweckmäßig im Bereich des stirnseitigen Endes, welches demjenigen gegenüber liegt, an dem sich der Gasanschluss befindet.

Länge, Anzahl und Durchmesser der Hohlfasermembranen richten sich nach der gewünschten Anwendung. Zur Abwasserreinigung in Membranbioreaktoren haben sich solche Filtrationsvorrichtungen bewährt, in denen die Gesamtoberfläche der Hohlfasermembranen eine Filtrationsoberfläche von 0,1 bis 10 m², insbesondere 0,5 bis 5 m², aufweist. Als Hohlfasermembranen können grundsätzlich alle diejenigen verwendet werden, die bereits im Stand der Technik zu Filtrationszwecken eingesetzt wurden. Für die Abwasserreinigung geeignet sind beispielsweise diejenigen Materialien, die in der WO 97/06880 A2 und den dort erwähnten Druckschriften genannt sind. Erfindungsgemäß bevorzugt sind Hohlfasermembranen aus Keramik, insbesondere Aluminiumoxid-Keramik, und Polymermembranen aus Polyethylen, Polypropylen, Polyethersulfon oder Mischungen derselben. Geeignete Porengrößen liegen beispielsweise im Bereich von 0,001 bis 1 µm. Die Druckbedingungen können ebenfalls den in der WO '880 beschriebenen entsprechen.

Mehrere erfindungsgemäße Filtrationsvorrichtungen können zu einem Filtrationsmodul kombiniert werden, welcher ebenfalls Gegenstand der Erfindung ist. Die Kombination der Filtrationsvorrichtungen zu einem Modul kann grundsätzlich entsprechend der im Stand der Technik für ähnliche Vorrichtungen beschriebenen Art und Weise geschehen. Beispielsweise kann das Filtrationsmodul geeignete Halterungen aufweisen, in denen die Filtrationsvorrichtungen in bestimmter Orientierung zueinander befestigt werden können. Bevorzugt werden die Filtrationsvorrichtungen vertikal nebeneinander aufgestellt, wobei die Seite, an welcher das Gas zugeführt wird, sich zweckmäßig unten befindet. Bevorzugt werden so viele Fittrationsvorrichtungen im Filtrationsmodul angeordnet, dass sich eine Filtrationsfläche von 50 bis 700 m²/m³ eingenommenem Raum und insbesondere von 100 bis 400 m²/m³ ergibt.

Für den parallelen Betrieb der im Filtrationsmodul enthaltenen Fittrationsvorrichtungen ist zweckmäßig eine gemeinsame Zuleitung für Gas vorgesehen. Zweckmäßig ist ebenfalls eine gemeinsame Ableitung für die gereinigte Flüssigkeit, das Permeat, vorhanden. Verteilungsleitungen für Gaszuleitung und Permeat-Ableitung auf die einzelnen Filtrationsvorrichtungen können von Vorteil in die Haltevorrichtungen für die Filtrationsvorrichtungen integriert sein.

Wie bereits erwähnt, eignen sich die erfindungsgemäße Filtrationsvorrichtung und das Filtrationsmodul besonders für die Aufbereitung von Wasser oder Abwasser, insbesondere für die Abtrennung biologischer Schlämme in den sogenannten Membranbioreaktoren.
Gegenstand der Erfindung ist weiterhin ein Verfahren zur Aufbereitung von Wasser oder Abwasser gemäß Anspruch 12. Während des Filtrationsvorgangs auf den Außenoberflächen der Hohlfasermembranen gebildete Ablagerungen werden entfernt, indem Gas durch die Außenumfangsflächen des Trägers ausgeblasen wird. Durch den geringen Abstand zwischen Gasauslassöffnungen und Hohlfasermembranen sowie die gleichmäßige Gaszufuhr über die Länge der Hohlfasermembranen ergibt sich eine ausgezeichnete Reinigungswirkung bei einem sehr geringen Gasvolumen.

Das Ausblasen des Gases erfolgt vorzugsweise diskontinuierlich oder schubweise. Diese pulsierende Gaszufuhr bewirkt, dass sich bei einem vertikal stehenden Träger die im Inneren des Trägers befindliche Flüssigkeitssäule mit ihrem Gewicht und ihrem Strömungswiderstand dem angelegten Gasstrom entgegensetzt. Dies führt dazu, dass sich im unmittelbaren Grenzbereich zu den Membranen eine hohe Strömungsgeschwindigkeit und hohe Druckdifferenz aufbauen. Als Folge davon werden sich bildende Ablagerungen und Belege besonders gut abgeschert.

Wie bereits erwähnt, liegt der Erfindung ebenfalls die Erkenntnis zu Grunde, dass das Entstehen von Ablagerungen auf der Membranoberfläche stark von den Bedingungen beeinflusst wird, unter denen die Filtration durchgeführt wird. Im Rahmen der Untersuchungen, die dieser Erfindung voraus gingen, wurde festgestellt, dass in Membranbioreaktoren nicht nur das Ablagern von Biomasse zur Verringerung der Abtrennleistung der Hohlfasermembranen führt. Gerade bei nachteiligen Umgebungsbedingungen kann sich die Trennwirkung der Membranen deutlich verschlechtern. Zum einen entstehen beim Zerfall der Biomasse im Belebtschlamm extrazelluläre Polymere (EZP), deren Menge unter bestimmten physischen Stressbedingungen deutlich zunimmt. Die extrazellulären Polymere fördern den Aufwuchs auf der Membranoberfläche ("Bio-Fouling"). Über- oder untersteigt der Gehalt an EZPs das gewünschte Maß, nimmt die Filtrierbarkeit der Biomasse deutlich ab. Außerdem haften unter diesen Bedingungen in dem Belebtschlamm suspendierte Partikel deutlich leichter an der Membranoberfläche an.
Zum anderen wurde festgestellt, dass bestimmte fadenförmige Organismen (z.B. Bakterien des Typs Microthrix parvicella, Noccardia, Typ 021 N usw.) ähnliche negative Auswirkungen auf die Durchsatzleistung der Hohlfasermembranen haben wie die extrazellulären Polymere.

Ein weiterer Aspekt der Erfindung betrifft daher Maßnahmen, mit welchen die ungünstigen Umgebungsbedingungen vermieden werden können, die die Durchsatzleistungen der Hohlfasermembranen in Membranbioreaktoren herabsetzen. Ein entsprechendes Verfahren sowie ein spezieller Membranbioreaktor sind ebenfalls Gegenstand der Erfindung.

Die Lösung des angesprochenen Problems gelingt dadurch, dass dem Filtrationsbecken, welches die erfindungsgemäßen Filtervorrichtungen enthält, wenigstens ein Becken vorgeschaltet ist, welchem hochbelastetes Abwasser (im folgenden "Rohabwasser" genannt) zugeführt wird. Dieses Vorschaltbecken wird nachfolgend als Kontaktor bezeichnet. In diesen Kontaktor wird zumindest ein Teil des biologisch aktiven Materials aus dem Filtrationsbecken zurückgeführt.

Dadurch werden die im Belebtschlamm gebildeten Mikroorganismen einem Wechsel der Umgebungsbedingungen ausgesetzt. Dieser Belastungswechsel führt zum Absterben insbesondere der fadenförmigen Organismen. Besonders gut sind die Wirkungen, wenn der Belastungswechsel mehrfach wiederholt wird. Aus diesem Grund wird das zu reinigende Abwasser mehrmals zwischen Kontaktor und Filtrationsbecken zirkuliert. Bevorzugt ist, wenn die Rückführungsmenge aus dem Filtrationsbecken 5 bis 300 Vol%, insbesondere 10 bis 100 Vol%, der Tageszulaufmenge an Rohabwasser beträgt. Die Verweilzeit des Rückflusses aus dem Filtrationsbecken im Kontaktor beträgt zweckmäßig zwischen 2 und 120 Minuten, insbesondere zwischen 20 und 90 Minuten.

Außerdem hat es sich als zweckmäßig erwiesen, in den dem Filtrationsbecken vorgeschalteten Becken für ein bestimmtes Verhältnis von Biomasse zu organischer Belastung zu sorgen. Erfindungsgemäß wird zu diesem Zweck für ein bestimmtes Verhältnis von biochemischem Sauerstoffbedarf (CSB) des Rohabwassers zu dem aus dem Filtrationsbecken zurückgeführten biologischen Schlamm (TS) gesorgt und zwar derart, dass in dem Bereich des Kontaktors, in welchen biologisch aktives Material aus dem Filtrationsbecken zurückgeführt wird, im Rohabwasser das Verhältnis auf 1 bis 100 kg CSB/kg TS pro Tag und bevorzugt 5 bis 70 kg CSB/kg TS pro Tag eingestellt wird. Die Einstellung des Verhältnisses erfolgt zweckmäßig durch entsprechende Dimensionierung des Kontaktors und/oder der Kapazität von dessen Zu- und Ableitungen.

Zweckmäßig lässt man das Verhältnis zwischen biochemischem Sauerstoffbedarf (CSB) und biologischem Schlamm (TS) im Kontaktor auf einen solchen Wert absinken, dass sich nach dem Zurückleiten des Abwassers aus dem Kontaktor in das Filtrationsbecken im Filtrationsbecken ein Verhältnis zwischen biochemischem Sauerstoffbedarf (CSB) und biologischem Schlamm (TS) von 0,01 bis 1 kg CSB/kg TS pro Tag, vorzugsweise 0,02 bis 0,6 kg CSB/kg TS pro Tag, einstellt. Liegt das Verhältnis CSB/TS in dem angegebenen Bereich, stellen sich im Filtrationsbecken für die Membranfiltration optimale Bedingungen ein. Die Bildung von Ablagerungen auf den Membranoberflächen wird deutlich reduziert.

Der Kontaktor kann aus lediglich einem Kontaktorbecken bestehen. Bevorzugt ist der Kontaktor jedoch in wenigstens zwei hintereinander geschaltete Kontaktorbecken unterteilt, wobei die Fließrichtung von einem ersten Kontaktorbecken zu einem letzten, dem Filtrationsbecken unmittelbar vorgeschalteten Kontaktorbecken verläuft und das Einleiten von Rohabwasser sowie das Rückführen biologisch aktiven Materials aus dem Filtrationsbecken jeweils in das erste Kontaktorbecken erfolgen und das Abwasser aus dem letzten Kontaktorbecken in das Filtrationsbecken zurückgeleitet wird.
Das vorstehend angegebene höchste Verhältnis CSB/TS liegt also im ersten Kontaktorbecken vor und nimmt zum letzten Becken hin ab, von wo dann das Abwasser mit besonders geeigneten Konzentrationen an EZBs und deutlich verringertem Anteil Mikroorganismen in das Filtrationsbecken zurückgeführt wird. Auf diese Weise wird das Ausmaß der Entstehung von Ablagerungen auf den Membranen deutlich reduziert.

Bevorzugt beträgt die Anzahl der Kontaktorbecken zwischen 2 und 20, insbesondere 3 bis 12. Die Abnahme des Verhältnisses CSB/TS in diesen Becken erfolgt vorzugsweise in im Wesentlichen gleichmäßigen Stufen.

Das Absinken des Verhältnisses CSB/TS wird durch Biosorption und Inkorporation organischen Materials erreicht. Auf diese Weise wird auch ein Großteil der freien extrazellulären Polymere entfernt, da diese bei Verwendung eines Kontaktors vermehrt in Form von Flockenformation gebunden werden. Dabei werden auch große Mengen an sonst schwer filtrierbaren organischen Makromolekülen bereits direkt an Belebtschlammflocken gebunden, wobei die extrazellulären Polymere diesen Vorgang stark fördern. Auf diese Weise werden erheblich besser filtrierbare Suspensionen erhalten.

Bevorzugt für die Ausflockung ist es, wenn im Kontaktor keine Durchmischung erfolgt. Es wird daher vorzugsweise auf mechanisches Rühren und Mischen verzichtet. Statt dessen sind im Kontaktor vorzugsweise Umlenkwände, insbesondere horizontale oder vertikale Schikanen, vorhanden, die dazu dienen, eine bestimmte Fließgeschwindigkeit einzustellen. Diese liegt zweckmäßig im Bereich von 1 bis 60 m/Std., vorzugsweise 10 bis 40 m/Std. Besonders bevorzugt ist der Kontaktor oder sind bestimmte Beckenteile des Kontaktors als Propfenströmungs- oder Röhrenreaktor ausgebildet.

Außerdem kann der erfindungsgemäße Membranbioreaktor weitere Komponenten enthalten, wie sie im Stand der Technik üblich sind. Beispielsweise kann eine Belüftungseinrichtung für den Kontaktor vorgesehen sein, um in Abhängigkeit vom zu behandelnden Substrat geeignete aerobe, anaerobe oder anoxische Bedingungen einstellen zu können.

Die Erfindung soll nachfolgend anhand von Zeichnungen näher erläutert werden. Daran zeigen schematisch:
- Figur 1: eine erfindungsgemäße Filtrationsvorrichtung in Draufsicht;
- Figur 2: ein Hohlfasermembranbündel zur Verwendung in der erfindungsgemäßen Filtrationsvorrichtung gemäß Figur 1;
- Figur 3: einen erfindungsgemäßen Filtrationsmodul und
- Figur 4: einen erfindungsgemäßen Membranbioreaktor im Querschnitt.

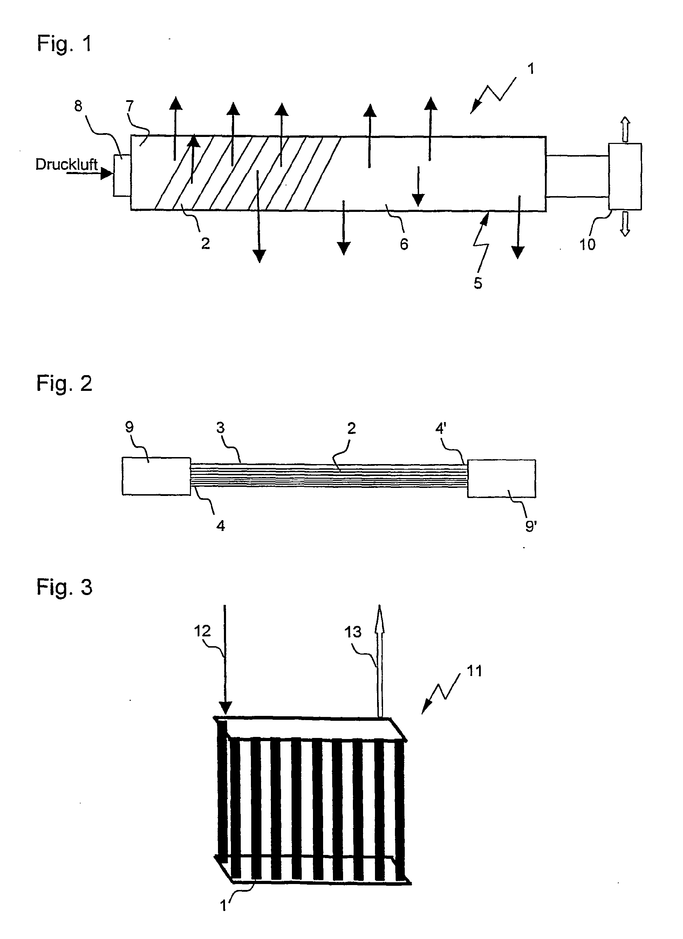

Figur 1 zeigt eine erfindungsgemäße Filtrationsvorrichtung 1 in Draufsicht. Die Filtrationsvorrichtung 1 umfasst eine Gaszufuhrvorrichtung 5 mit einem im Wesentlichen zylindrischen Träger 6. Die Außenumfangsfläche 7 des Trägers 6 weist über ihre gesamte Fläche gleichmäßig verteilte Durchgangsöffnungen auf, die der Übersichtlichkeit halber hier nicht dargestellt sind. Im unteren stirnseitigen Bereich des Trägers 6 ist ein Druckluftanschluss 8 vorhanden, durch welchen Druckluft ins Innere des Trägers 6 zugeführt wird. Diese Druckluft tritt durch die Öffnungen auf der Außenumfangsfläche 7 des Trägers 6 nach außen aus. Auf die Außenumfangsfläche 7 ist ein Faserbündel 2 aufgewickelt. Dieses Faserbündel ist hier nur schematisch und auf einen Teilbereich der Außenumfangsfläche 7 beschränkt dargestellt. Tatsächlich ist es jedoch über die gesamte Außenumfangsfläche 7 gleichmäßig aufgewickelt.

Das Faserbündel 2 ist in Figur 2 deutlicher dargestellt. Es besteht aus einer Vielzahl dünner Hohlfasermembranen 3, die beispielsweise eine Länge von bis zu 3 m aufweisen. Es sind zum Beispiel so viele Hohlfasermembranen 3 im Faserbündel 2 zusammengefasst, dass sich eine Filtrationsoberfläche von 4 m² ergibt Die jeweiligen Enden 4 und 4' der Hohlfasermembranen 3 sind an Anschlussköpfen 9 und 9' befestigt. Hierfür sind in den Anschlussköpfen 9 und 9' Durchgangsöffnungen für die Faserenden 4 und 4' vorgesehen, in welche letztere eingebettet werden. Die Hohlfasermembranen 3 bleiben durch die Einbettung in die Anschlussköpfe 9 und 9' an beiden Enden 4 und 4' offen. Das Einbetten kann auf an sich bekannte Weise erfolgen, wie beispielsweise in den eingangs erwähnten Druckschriften beschrieben.

Zum Aufwickeln auf den Träger 6 wird einer der beiden Anschlussköpfe 9 oder 9' auf ein Ende des T-förmigen Sauganschlusses 10 aufgesteckt, welcher sich an einem stirnseitigen Ende des Trägers 6 befindet. Anschließend wird das Faserbündel 2 um die Außenumfangsfläche 7 des Trägers 6 in Richtung auf den Druckanschluss 8 hin und anschließend wieder zurück auf den Sauganschluss 10 zu gewickelt. Dann wird der zweite Anschlusskopf auf das zweite Ende des T- förmigen Anschluss aufgesteckt.

Mehrere der erfindungsgemäßen Filtrationsvorrichtungen 1 können zu einem Filtrationsmodul 11 kombiniert werden, welcher in Figur 3 schematisch dargestellt ist. Die Filtrationsvorrichtungen 1 werden mit dem Druckluftanschluss 8 nach unten in eine geeignete Halterung eingestellt, die hier nicht näher wiedergegeben ist. In Filtrationsmodul 11 sind alle Druckluftanschlüsse 8 der Filtrationsvorrichtungen 1 an einen gemeinsamen Druckluftanschluss 12 angeschlossen. Desgleichen sind alle Sauganschlüsse 10 im oberen Bereich der Filtrationsvorrichtung 1 mit einer gemeinsamen Ableitung 13 für das aus den Hohlfasermembranen 3 abgezogene Permeat verbunden. Die Ableitung 13 kann mit einer geeigneten Pumpe verbunden sein.

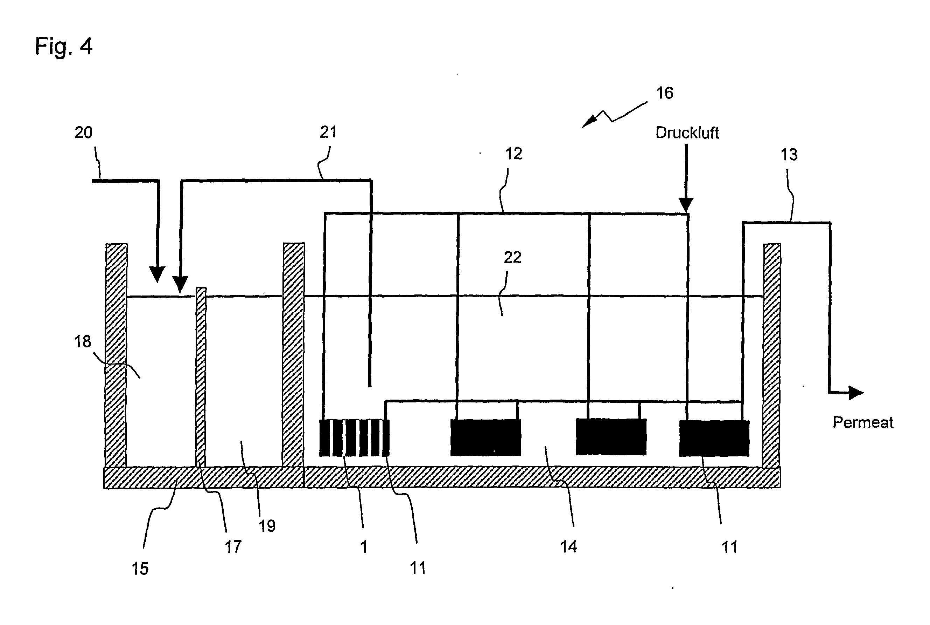

Im erfindungsgemäßen Verfahren zur Reinigung von Wasser oder Abwasser wird der in Figur 3 dargestellte Filtrationsmodul 11 in ein Filtrationsbecken eingestellt, in welchem sich die zu filtrierende Flüssigkeit befindet. Das erfindungsgemäße Verfahren soll am Beispiel von Figur 4 gemeinsam mit dem erfindungsgemäßen Membranbioreaktor erläutert werden.
Der Membranbioreaktor 16 dient hier zur Klärung von kommunalem Abwasser im Belebtschlammverfahren. Er umfasst ein Filtrationsbecken 14, welches mit vorgeklärtem Abwasser 22 befüllt ist. Im Filtrationsbecken 14 befinden sich mehrere parallel geschaltete Filtrationsmodule 11, die jeweils mehrere Filtrationsvorrichtungen 1 umfassen. Die Filtrationsmodule 11 sind jeweils mit einer Ableitung 13 für das filtrierte Permeat und einer Druckluftzuleitung 12 zum Einblasen von Druckluft verbunden. Durch diese Druckluftleitung 12 wird den einzelnen Filtrationsmodulen 11 und den in diesen zusammengefassten Filtrationsvorrichtungen 1 Druckluft zugeleitet. Dies geschieht bevorzugt in der beschriebenen diskontinuierlichen, schubweisen Art und Weise. Die Druckluft gelangt über die Zuleitung 12 zu den Druckluftanschlüssen 8 der einzelnen Filtrationsvorrichtungen 1 und von hier in das Innere der Träger 6. Durch die Durchgangsöffnungen in den Außenumfangsflächen 7 der Filtrationsvorrichtungen tritt die Druckluft gleichmäßig und großflächig aus. Sie bewirkt ein gleichmäßiges und sehr effektives Abscheren von Ablagerungen, die sich auf den Membranoberflächen der Hohlfasermembranen 3 gebildet haben.
Permeat, welches in das Innere der Hohlfasermembranen 3 eingetreten ist, wird über die Sauganschlüsse 10 der einzelnen Filtrationsvorrichtungen 1 und die Ableitung 13 für das Permeat aus dem Membranbioreaktor 16 abgezogen. Die Ableitung 13 kann auch im Umkehrbetrieb betrieben werden. Dies geschieht, wenn eine Flüssigkeitsreinigung der Hohlfasermembranen, insbesondere unter Zusatz reinigender Chemikalien, durchgeführt werden soll. Dieser Rückspulvorgang ist grundsätzlich bekannt und beispielsweise in der bereits erwähnten US 6,214,231 B1 beschrieben. Flüssigkeit wird unter erhöhtem Druck durch die Leitung 13 und die einzelnen Sauganschlüsse 10 ins Innere der Hohlfasermembranen 3 gepumpt und tritt durch die Membranoberflächen hindurch nach außen aus. Dies führt zum Ablösen von auf der Membranoberfläche haftenden Ablagerungen. Auf Grund der sehr effektiven Druckluftreinigung sind solche Rückspulvorgänge bei der erfindungsgemäßen Vorrichtung jedoch nicht sehr häufig notwenig.

In einem weiteren Aspekt der Erfindung kann die Abwasserreinigung auch auf eine solche Art und Weise durchgeführt werden, dass Ablagerungen auf Grund der gezielt gesteuerten Bedingungen im erfindungsgemäßen Membranbioreaktor 16 von vornherein reduziert werden. Zu diesem Zweck ist dem Filtrationsbecken 14 des erfindungsgemäßen Bioreaktors 16 ein Kontaktor 15 vorgeschaltet. Der Kontaktor 15 ist hier durch eine senkrechte Trennwand 17 am Boden des Reaktors in zwei Beckenabschnitte 18 und 19 geteilt. Der Kontaktor kann auch lediglich ein einziges Becken umfassen. In der Praxis werden üblicherweise mehr als zwei Becken vorhanden sein. Der besseren Übersichtlichkeit halber sind hier aber nur zwei Becken dargestellt. Erstes Becken 18 und zweites Becken 19 sind durch eine nicht dargestellte Überleitung miteinander verbunden. Ebenso ist eine Überleitung zwischen dem zweiten Becken 19 und dem Filtrationsbecken 14 vorhanden. In das erste Becken 18 des Kontaktors 15 führen zwei Zuleitungen, nämlich eine Zuleitung 20 für Rohabwasser und eine Zuleitung 21, mit welcher Material aus dem Filtrationsbecken 14 in den Kontaktor, genauer in das erste Becken 18, rezirkuliert werden kann. Die Zulaufmenge aus beiden Zuleitungen 20 und 21 relativ zur Füllmenge des ersten Kontaktorbeckens 18 wird über die entsprechende Dimensionierung des Kontaktorbeckens und die Pumpleistung der den Zuleitungen 20 und 21 zugeordneten (nicht dargestellten) Pumpen eingestellt. Erfindungsgemäß erfolgt die Regelung dabei derart, dass sich im ersten Becken 18 ein Verhältnis von 1 bis 100 kg biochemischem Sauerstoffbedarf des Rohabwassers aus der Zuleitung 20 pro kg rückgeführten biologischen Schlamms aus der Zuleitung 21 einstellt. Bevorzugt erfolgt die Regelung der Zuleitungen 20 und 21 derart, dass sich ein Verhältnis von 5 bis 70 kg CSB/kg rückgeführten Schlamms pro Tag ergibt.

Die Rückführmenge von Biomasse aus dem Filtrationsbecken 14 durch die Leitung 21 wird zweckmäßig so eingestellt, dass sie 5 bis 300 Vol%, insbesondere 10 bis 100 Vol%, der Tageszulaufmenge an Rohabwasser beträgt. Die Verweilzeit des Rückflusses im Kontaktor 15 liegt zweckmäßig zwischen 2 und 120 Min., vorzugsweise zwischen 20 und 90 Min. Die Fließgeschwindigkeit innerhalb des Kontaktors 15 wird zweckmäßig auf 1 bis 60 m/Std., insbesondere 10 bis 40 m/Std., eingestellt. Zur Einstellung der Fließgeschwindigkeit und für die bessere Durchmischung innerhalb des Kontaktors 15 können beispielsweise horizontale oder vertikale Schikanen eingebaut sein. Diese sind der Übersichtlichkeit halber hier nicht dargestellt, aber an sich grundsätzlich bekannt. Bevorzugt ist der Kontaktor mit seinem ersten Becken 18 und zweiten Becken 19 als Propfenströmungs- oder Röhrenreaktor ausgebildet.

Im Verlauf der Verweilzeit der Biomasse im Kontaktor 15 sinkt der Anteil an extrazellulären Polymeren und an schwer filtrierbaren organischen Makromolekülen durch Ausflockung ab. Die Anwesenheit der extrazellulären Polymere fördert dabei das Binden der organischen Makromoleküle an Belebtschlammflocken. Gleichzeitig reduziert sich auch die Konzentration an Mikroorganismen, da sie in den hochbelasteten Beckenteilen, in welche sie aus dem Filtrationsbecken 14 zurückgeführt wurden, absterben. Entsprechend sinkt mit längerer Verweilzeit im Kontaktor 15 auch das Verhältnis CSB/TS. Es ist daher im zweiten Reaktor 19 niedriger als im ersten Reaktor 18. Das Abwasser wir vorzugsweise solange im zweiten Reaktor 19 belassen, bis sich bei der Rückführung des Abwassers 22 aus dem letzten Kontaktorbecken 19 in das Filtrationsbecken 14 in letzterem ein Verhältnis CSB/TS in einem Bereich zwischen 0,01 und 1 kg CSB/kg TS pro Tag und vorzugsweise 0,02 bis 0,6 kg CSB/kg TS pro Tag einstellt. Bei Einhaltung dieser Werte im Filtrationsbecken 14 ergeben sich Bedingungen, welche die Bildung von Ablagerungen auf den Hohlfasermembranen 3 erschweren. Es wird eine deutlich verbesserte Filtrierbarkeit des Abwassers 22 gegenüber dem herkömmlichen Betrieb von Membranbioreaktoren beobachtet. Der Durchsatz gegenüber herkömmlichen Reaktoren kann daher deutlich erhöht werden. Wartungs- und Reinigungsarbeiten sind dagegen weniger häufig erforderlich.

Der erfindungsgemäße Membranbioreaktor 16 kann weitere im Stand der Technik übliche Bestandteile oder Vorrichtungen enthalten. Beispielsweise ist es möglich, für den Kontaktor 15 eine Belüftungseinrichtung vorzusehen, um je nach zu reinigendem Klärschlamm für aerobe, anoxische oder anaerobe Umgebungsbedingungen zu sorgen. Auch Rührvorrichtungen zur Umwälzung des Abwassers in den einzelnen Becken können verwendet werden, wenn es auch gegenwärtig bevorzugt ist, im Kontaktor 15 kein Rührwerk vorzusehen.

## Patentansprüche

1. Filtrationsvorrichtung (1) zum Abtrennen von Partikeln aus einer Flüssigkeit mittels zu einem Faserbündel (2) zusammengefasster Hohlfasermembranen (3), welche von außen nach innen von der Flüssigkeit durchströmbar sind und aus denen von wenigstens einem ihrer jeweiligen Enden (4) filtrierte Flüssigkeit abgezogen wird, und worin eine Gaszufuhrvorrichtung (5) vorhanden ist, um das Äußere der Hohlfasermembranen (3) mit einem Gas zu umspülen,
**dadurch gekennzeichnet,**
**dass** die Gaszufuhrvorrichtung (5) einen Träger (6) umfasst, dessen Außenumfangsfläche (7) zumindest teilweise von innen nach außen für das Gas durchlässig ist, dass der Träger (6) an einem stirnseitigen Ende einen Druckluftanschluss (8) aufweist, durch welchen Gas ins Innere des Trägers (6) zugeführt wird,
und **dass** das Faserbündel (2) auf die Außenumfangsfläche (7) des Trägers (6) aufgewickelt ist

2. Filtrationsvorrichtung gemäß Anspruch 1,
**dadurch gekennzeichnet,**
**dass** die Außenumfangsfläche (7) Durchgangsöffnungen in Form von Löchern oder Schlitzen aufweist oder aus porösem Material besteht und vorzugsweise die Form eines Zylindermantels aufweist.

3. Filtrationsvorrichtung gemäß Anspruch 1 oder 2,
**dadurch gekennzeichnet,**
**dass** die Außenumfangsfläche (7) des Trägers (6) eine Länge von 1 bis 100 cm, vorzugsweise 5 bis 70 cm, und einen Durchmesser von 1 bis 40 cm, vorzugsweise 5 bis 20 cm, aufweist

4. Filtrationsvorrichtung gemäß einem der Ansprüche 1 bis 3,
**dadurch gekennzeichnet,**
**dass** die Enden (4) der Hohlfasermembranen (3) in wenigstens einem Anschlusskopf (9) befestigt sind, welcher mit einem Sauganschluss (10) zum Abziehen von Permeat aus den Hohlfasermembranen (3) verbunden ist.

5. Filtrationsvorrichtung gemäß Anspruch 4,
**dadurch gekennzeichnet,**
**dass** die ersten Enden (4) jeder Hohlfasermembran (3) mit einem ersten Anschlusskopf (9) und die jeweils anderen Enden (4') der Hohlfasermembranen (3) mit einem zweiten Anschlusskopf (9') verbunden sind.

6. Filtrationsvorrichtung gemäß Anspruch 4 oder 5,
**dadurch gekennzeichnet,**
**dass** Anschlusskopf (9, 9') und Druckluftanschluss (8) an gegenüberliegenden stirnseitigen Enden des Trägers (6) angeordnet sind.

7. Filtrationsvorrichtung gemäß einem der Ansprüche 1 bis 6,
**dadurch gekennzeichnet,**
**dass** mehrere Hohlfasermembranen (3) derart zu einem Faserbündel (2) zusammengefasst sind, dass letzteres eine Filtrationsoberfläche von 0,1 bis 10 m², insbesondere 0,5 bis 5 m², aufweist.

8. Filtrationsmodul (11),
**dadurch gekennzeichnet,**
**dass** er mehrere Filtrationsvorrichtungen (1) gemäß einem der Ansprüche 1 bis 7 umfasst, insbesondere mehrere vertikal nebeneinander mit der Gaszufuhrseite nach unten angeordnete Filtrationsvorrichtungen (1).

9. Filtrationsmodul gemäß Anspruch 8,
**dadurch gekennzeichnet,**
**dass** die Filtrationsvorrichtungen (1) derart angeordnet sind, dass sich eine Filtrationsfläche von 50 bis 700 m²/m³, insbesondere 100 bis 400 m²/m³, ergibt.

10. Filtrationsmodul gemäß Anspruch 8 oder 9,
**dadurch gekennzeichnet,**
**dass** die Filtrationsvorrichtungen (1) eine gemeinsame Zuleitung (12) für Gas, vorzugsweise Druckluft, und/oder eine gemeinsame Ableitung (13) für Permeat aufweisen.

11. Verwendung der Filtrationsvorrichtung (1) gemäß einem der Ansprüche 1 bis 7 oder des Filtrationsmoduls (11) gemäß einem der Ansprüche 8 bis 10 zur Aufbereitung von Wasser oder Abwasser.

12. Verfahren zur Aufbereitung von Wasser oder Abwasser,
umfassend die Schritte:
Einleiten von mit biologisch aktivem Material verunreinigtem Wasser (22) in ein Filtrationsbecken (14), in dem wenigstens eine Filtrationsvorrichtung (1) angeordnet ist, in welcher das biologisch aktive Material aus dem Wasser mittels zu einem Faserbündel (2) zusammengefasster Hohlfasermembranen (3) abgetrennt wird, welche von außen nach innen von der Flüssigkeit durchströmt werden, und
Abziehen des von dem biologisch aktiven Material gereinigten Wassers aus wenigstens einem der jeweiligen Enden (4) der Hohlfasermembranen (3),
wobei die wenigstens eine Filtrationsvorrichtung (1) eine Gaszufuhrvorrichtung (5) mit einem Träger (6) umfasst, dessen Außenumfangsfläche (7) zumindest teilweise von innen nach außen für das Gas durchlässig ist,
das Faserbündel (2) auf die Außenumfangsfläche (7) des Trägers (6) aufgewickelt ist,
der Träger (6) an einem stirnseitigen Ende einen Anschluss (8) für Gas aufweist, durch welchen Gas ins Innere des Trägers (6) zugeführt wird, und
auf den Außenoberflächen der Hohlfasermembranen (3) gebildete Ablagerungen durch Ausblasen von Gas durch die Außenumfangsfläche (7) des Trägers (6) von den Hohlfasermembranen (3) entfernt werden.

13. Verfahren gemäß Anspruch 12,
**dadurch gekennzeichnet,**
**dass** das Gas diskontinuierlich zugeführt wird.

14. Verfahren gemäß einem der Ansprüche 12 oder 13,
**dadurch gekennzeichnet,**
**dass** dem Filtrationsbecken (14) ein Kontaktor (15) vorgeschaltet ist und zumindest ein Teil des im Filtrationsbecken (14) abgetrennten biologisch aktiven Materials in den Kontaktor (15) zurückgeführt wird.

15. Verfahren gemäß Anspruch 14,
**dadurch gekennzeichnet,**
**dass** die Rückführungsmenge aus dem Filtrationsbecken (14) 5 bis 300 Vol%, insbesondere 10 bis 100 vol%, der Tageszulaufmenge an Rohabwasser beträgt.

16. Verfahren gemäß Anspruch 14 oder 15,
**dadurch gekennzeichnet,**
**dass** die Verweilzeit im Kontaktor (15) 2 bis 120 min, insbesondere 20 bis 90 min, beträgt.

17. Verfahren gemäß einem der Ansprüche 14 bis 16,
**dadurch gekennzeichnet,**
**dass** in dem Becken des Kontaktors (15), in welchen biologisch aktives Material aus dem Filtrationsbecken (14) zurückgeführt wird, das Verhältnis zwischen biochemischem Sauerstoffbedarf des Rohabwassers (CSB) und aus dem Filtrationsbecken (14) zurückgeführtem biologischen Schlamm (TS) bei 1 bis 100 kg CSB/kg TS pro Tag, bevorzugt 5 bis 70 kg CSB/kg TS pro Tag, liegt.

18. Verfahren gemäß Anspruch 17,
**dadurch gekennzeichnet,**
**dass** man das Verhältnis zwischen biochemischem Sauerstoffbedarf (CSB) und biologischem Schlamm (TS) im Kontaktor (15) auf einen solchen Wert absinken lässt, dass sich nach dem Zurückleiten des Abwassers aus dem Kontaktor (15) in das Filtrationsbecken (14) im Filtrationsbecken (14) ein Verhältnis zwischen biochemischem Sauerstoffbedarf (CSB) und biologischem Schlamm (TS) von 0,01 bis 1 kg CSB/kg TS pro Tag, vorzugsweise 0,02 bis 0,6 kg CSB/kg TS pro Tag, einstellt.

19. Verfahren gemäß einem der Ansprüche 14 bis 18,
**dadurch gekennzeichnet,**
**dass** der Kontaktor (15) in wenigstens zwei hintereinander geschaltete Kontaktorbecken (18, 19) unterteilt ist, mit einer Fließrichtung von einem ersten Kontaktorbecken (18) zu einem letzten, dem Filtrationsbecken (14) unmittelbar vorgeschalteten Kontaktorbecken (19), das Einleiten von Rohabwasser sowie das Rückführen biologisch aktiven Materials aus dem Filtrationsbecken (14) jeweils in das erste Kontaktorbecken (18) erfolgen und das Abwasser aus dem letzten Kontaktorbecken (19) in das Filtrationsbecken (14) zurückgeleitet wird.

20. Verfahren gemäß einem der Ansprüche 14 bis 19,
**dadurch gekennzeichnet,**
**dass** die Fließgeschwindigkeit innerhalb des Kontaktors (15) auf 1 bis 60 m pro Stunde, insbesondere 10 bis 40 m pro Stunde, eingestellt wird.

21. Verfahren gemäß einem der Ansprüche 14 bis 20,
**dadurch gekennzeichnet,**
**dass** im Kontaktor (15) Umlenkwände zur Steuerung des Flüssigkeitsstroms vorhanden sind.

22. Verfahren gemäß Anspruch 21,
**dadurch gekennzeichnet,**
**dass** der Kontaktor (15) als Pfropfenströmungs- oder Röhrenreaktor ausgebildet ist.

23. Membranbioreaktor (16) mit einem Filtrationsbecken (14), in dem sich eine Membran-Filtrationseinheit befindet,
**dadurch gekennzeichnet,**
**dass** die Membran-Filtrationseinheit aus wenigstens einem Filtrationsmodul (11) gemäß einem der Ansprüche 8 bis 10 besteht und
**dass** dem Filtrationsbecken (14) ein Kontaktor (15) mit wenigstens einem Kontaktorbecken vorgeschaltet ist, in den ein Zulauf (20) für Rohabwasser und ein Zulauf (21) zum Rückführen biologisch aktiven Materials aus dem Filtrationsbecken (14) münden.

24. Membranbioreaktor gemäß Anspruch 23,
**dadurch gekennzeichnet,**
**dass** der Kontaktor (15) in wenigstens zwei hintereinander geschaltete Kontaktorbecken (18, 19) unterteilt ist, mit einer Fließrichtung von einem ersten Kontaktorbecken (18) zu einem letzten, dem Filtrationsbecken (14) unmittelbar vorgeschalteten Kontaktorbecken (19), und der Zulauf (20) zum Einleiten von Rohabwasser sowie der Zulauf (21) zum Rückführen biologisch aktiven Materials aus dem Filtrationsbecken (14) jeweils in das erste Kontaktorbecken (18) münden.

25. Membranbioreaktor gemäß Anspruch 23 oder 24,
**dadurch gekennzeichnet,**
**dass** der Kontaktor (15) so dimensioniert ist, dass sich in dem Bereich, in welchen biologisch aktives Material aus dem Filtrationsbecken (14) zurückgeführt wird, ein Verhältnis zwischen biochemischem Sauerstoffbedarf des Rohabwassers (CSB) und aus dem Filtrationsbecken (14) zurückgeführtem biologischen Schlamm (TS) von 1 bis 100 kg CSB/kg TS pro Tag, bevorzugt 5 bis 70 kg CSB/kg TS pro Tag, einstellt.

26. Membranbioreaktor gemäß Anspruch 24 oder 25,
**dadurch gekennzeichnet,**
**dass** das Verhältnis zwischen biochemischem Sauerstoffbedarf und biologischem Schlamm vom ersten Kontaktorbecken (18) zum letzten Kontaktorbecken (19) hin abnimmt.

27. Membranbioreaktor gemäß einem der Ansprüche 23 bis 26,
**dadurch gekennzeichnet,**
**dass** der Kontaktor (15) in 2 bis 20, insbesondere 3 bis 12, Kontaktorbecken unterteilt ist

28. Membranbioreaktor gemäß einem der Ansprüche 23 bis 27,
**dadurch gekennzeichnet,**
**dass** das Verhältnis zwischen biochemischem Sauerstoffbedarf (CSB) und biologischem Schlamm (TS) im Rücklauf aus dem Kontaktor (15) in das Filtrationsbecken (14) einen solchen Wert aufweist, dass sich im Filtrationsbecken (14) ein Verhältnis zwischen biochemischem Sauerstoffbedarf (CSB) und biologischem Schlamm (TS) von 0,01 bis 1 kg CSB/kg TS pro Tag, vorzugsweise 0,02 bis 0,6 kg CSB/kg TS pro Tag, einstellt.

29. Membranbioreaktor gemäß einem der Ansprüche 23 bis 28,
**dadurch gekennzeichnet,**
**dass** im Kontaktor (15) Umlenkwände zur Steuerung des Flüssigkeitsstrom vorhanden sind.

30. Membranbioreaktor gemäß einem der Ansprüche 23 bis 29,
**dadurch gekennzeichnet,**
**dass** für den Kontaktor (15) eine Belüftungsvorrichtung vorgesehen ist.

## Claims

1. A filtration apparatus (1) for separating particles from a liquid by means of hollow-fiber membranes (3) which are joined into fiber bundles (2) and which can be flowed through from the outside to the inside by the liquid and from which filtered liquid is withdrawn from at least one of its respective ends (4), and in which a gas supply apparatus (5) is present in order to flush the outside of the hollow-fiber membranes (3) with a gas,
**characterized in that** the gas supply apparatus (5) comprises a support (6) whose outer circumferential surface (7) is at least partly permeable from the inside to the outside for the gas, that the support (6) has a connection for compressed air (8) at a face side end through which gas is introduced into the inside of the support (6), and that the fiber bundle (2) is wound up on the outer circumferential surface (7) of the support (6).

2. A filtration apparatus according to claim 1, **characterized in that** the outer circumferential surface (7) comprises pass-through openings in form of holes or slots or is made of porous material and preferably has the shape of a cylinder jacket.

3. A filtration apparatus according to claim 1 or 2, **characterized in that** the outer circumferential surface (7) of the support (6) has a length of 1 to 100 cm, preferably 5 to 70 cm, and a diameter of 1 to 40 cm, preferably 5 to 20 cm.

4. A filtration apparatus according to one of the claims 1 to 3, **characterized in that** the ends (4) of the hollow-fiber membranes (3) are fastened to at least one connection head (9), which connection head is joined to a suction connection (10) for withdrawing permeate from the hollow-fiber membranes (3).

5. A filtration apparatus according to claim 4, **characterized in that** the first ends (4) of each hollow-fiber membrane (3) are connected with a first connection head (9) and the respective other ends (4') of the hollow-fiber membranes (3) are connected with a second connection head (9').

6. A filtration apparatus according to claim 4 or 5, **characterized in that** the connection head (9, 9') and the connection (8) for compressed air are arranged on opposite face-side ends of the support (6).

7. A filtration apparatus according to one of the claims 1 to 6, **characterized in that** several hollow-fiber membranes (3) are joined in such a way into a fiber bundle (2) that the latter has a filtration surface of 0.1 to 10 m², especially 0.5 to 5 m².

8. A filtration module (11), **characterized in that** it comprises several filtration apparatuses (1) according to one of the claims 1 to 7, especially several filtration apparatuses which are arranged vertically adjacent to one another, especially several filtration apparatuses(1) whose gas supply side faces downwardly.

9. A filtration module according to claim 8, **characterized in that** the filtration apparatuses (1) are arranged in such a way that a filtration surface of 50 to 700 m²/m³, especially 100 to 400 m²/m³, is obtained.

10. A filtration module according to claim 8 or 9, **characterized in that** the filtration apparatuses (1) have a common feed line (12) for gas, preferably compressed air, and/or a common discharge line (13) for permeate.

11. The use of the filtration apparatus (1) according to one of the claims 1 to 7 or the filtration module (11) according to one of the claims 8 to 10 for treating water or waste water.

12. A method for treating water or waste water, comprising the steps of:
introduction of water (22) which is contaminated with biologically active material into a filtration basin (14) in which at least one filtration apparatus (1) is arranged, in which the biologically active material is separated from the water by means of hollow-fiber membranes (3) which are joined into fiber bundles (2) which are flowed through from the outside to the inside by the liquid, and
withdrawal of the water purified from the biologically active material from at least one of the respective ends (4) of the hollow-fiber membranes (3),
wherein the at least one filtration apparatus (1) comprises a gas supply apparatus (5) having a support (6) whose outer circumferential surface (7) is at least partly permeable from the inside to the outside for the gas,
the fiber bundle (2) is wound up on the outer circumferential surface (7) of the support (6),
the support (6) has a connection for compressed air (8) at a face side end through which gas is introduced into the inside of the support (6), and
deposits formed on the outside surfaces of the hollow-fiber membranes (3) are removed from the hollow-fiber membranes (3) by the ejection of gas through the outer circumferential surface (7) of the support (6).

13. A method according to claim 12, **characterized in that** the gas is supplied in a discontinuous way.

14. A method according to one of the claims 12 or 13, **characterized in that** a contactor (15) is provided upstream of the filtration basin (14) and at least a portion of the biologically active material which is separated in the filtration basin (14) is recirculated to the contactor (15).

15. A method according to claim 14, **characterized in that** the recirculation quantity from the filtration basin (14) is 5 to 300 % by volume, especially 10 to 100 % by volume, of the daily supplied quantity of raw waste water.

16. A method according to claim 14 or 15, **characterized in that** the dwell time in the contactor (15) is 2 to 120 minutes, especially 20 to 90 minutes.

17. A method according to one of the claims 14 to 16, **characterized in that** in the basin of the contactor (15) in which biologically active material is recirculated from the filtration basin (14) the ratio between biochemical oxygen demand of the raw waste water (BOD) and activated sludge (AS) recirculated from the filtration basin (14) is 1 to 100 kg BOD/kg AS per day, preferably 5 to 70 kg BOD/kg AS per day.

18. A method according to claim 17, **characterized in that** the ratio between biochemical oxygen demand (BOD) and activated sludge (AS) in the contactor (15) is allowed to decrease to such a value that after the recirculation of the waste water from the contactor (15) to the filtration basin (14) a ratio is obtained in the filtration basin (14) between biochemical oxygen demand (BOD) and activated sludge (AS) of 0.01 to 1 kg BOD/kg AS per day, preferably 0.02 to 0.6 kg BOD/kg AS per day.

19. A method according to one of the claims 14 to 18, **characterized in that** the contactor (15) is divided into at least two successively switched contactor basins (18, 19), having a direction of flow from a first contactor basin (18) to a last contactor basin (19) being directly upstream of the filtration basin (14), that the introduction of raw waste water and the recirculation of biologically active material from the filtration basin (14) are made to the respectively first contactor basin (18), and that the waste water from the last contactor basin (19) is recirculated to the filtration basin (14).

20. A method according to one of the claims 14 to 19, **characterized in that** the flow speed within the contactor (15) is set to 1 to 60 m per hour, especially 10 to 40 m per hour.

21. A method according to one of the claims 14 to 20, **characterized in that** invert walls for controlling the liquid flow are present in the contactor (15).

22. A method according to claim 21, **characterized in that** the contactor (15) is arranged as a plug-type or tubular-type reactor.

23. A membrane bioreactor (16) with a filtration basin (14) in which a membrane filtration unit (11) is situated, **characterized in that** the membrane filtration unit consists of at least one of the filtration modules (11) as claimed in claims 8 to 10, and the filtration basin (14) is provided upstream with a contactor (15) with at least one contactor basin, into which open a supply line (20) for raw waste water and a supply line (21) for recirculating biologically active material from the filtration basin (14).

24. A membrane bioreactor according to claim 23, **characterized in that** the contactor (15) is divided into at least two successively arranged contactor basins (18, 19), having a direction of flow from a first contactor basin (18) to a last contactor basin (19) being directly upstream of the filtration basin (14), and the supply line (20) for introducing raw waste water and the supply line (21) for recirculating biologically active material from the filtration basin (14) each open into the first contactor basin (18).

25. A membrane bioreactor according to claim 23 or 24, **characterized in that** the contactor (15) is dimensioned in such a way that in the region in which biologically active material is recirculated from the filtration basin (14) a ratio is obtained between biochemical oxygen demand of the raw waste water (BOD) and activated sludge (AS) recirculated from the filtration basin (14) of 1 to 100 kg BOD/kg AS per day, preferably 5 to 70 kg BOD/kg AS per day.

26. A membrane bioreactor according to claim 24 or 25, **characterized in that** the ratio between biochemical oxygen demand and activated sludge decreases from the first contactor basin (18) to the last contactor basin (19).

27. A membrane bioreactor according to one of the claims 23 to 26, **characterized in that** the contactor (15) is divided into 2 to 20 contactor basins, especially 3 to 12 contactor basins.

28. A membrane bioreactor according to one of the claims 23 to 27, **characterized in that** the ratio between biochemical oxygen demand (BOD) and activated sludge (AS) in the recirculation from the contactor (15) to the filtration basin (14) has such a value that in the filtration basin (14) a ratio is obtained between biochemical oxygen demand (BOD) and activated sludge (AS) of 0.01 to 1 kg BOD/kg AS per day, preferably 0.02 to 0.6 kg BOD/kg AS per day.

29. A membrane bioreactor according to one of the claims 23 to 28, **characterized in that** invert walls for controlling the liquid flow are present in the contactor (15).

30. A membrane bioreactor according to one of the claims 23 to 29, **characterized in that** an aeration apparatus is provided for the contactor (15).

## Revendications

1. Dispositif de filtration (1) pour la séparation de particules à partir d'un liquide au moyen de membranes de fibres creuses (3) réunies en un faisceau de fibres (2), qui peuvent être parcourues de l'extérieur vers l'intérieur par le liquide et desquelles du liquide filtré peut être retiré par au moins une de leurs extrémités (4), et dans lequel est prévu un dispositif d'arrivée de gaz (5) pour faire circuler un gaz sur l'extérieur des membranes de fibres creuses (3), **caractérisé en ce que** le dispositif d'arrivée de gaz (5) comprend un support (6) dont la surface de circonférence extérieure (7) est au moins partiellement perméable au gaz de l'intérieur vers l'extérieur, **en ce que** le support (6) présente sur une face d'extrémité un raccord d'air comprimé (8) par lequel du gaz est amené à l'intérieur du support (6), et **en ce que** le faisceau de fibres (2) est enroulé sur la surface de circonférence extérieure (7) du support (6).

2. Dispositif de filtration selon la revendication 1, **caractérisé en ce que** la surface de circonférence extérieure (7) présente des ouvertures de passage sous la forme de trous ou de fentes ou se compose d'un matériau poreux et possède de préférence la forme d'une enveloppe cylindrique.

3. Dispositif de filtration selon la revendication 1 ou 2, **caractérisé en ce que** la surface de circonférence extérieure (7) du support (6) a une longueur de 1 à 100 cm, de préférence de 5 à 70 cm, et un diamètre de 1 à 40 cm, de préférence de 5 à 20 cm.

4. Dispositif de filtration selon l'une des revendications 1 à 3, **caractérisé en ce que** les extrémités (4) des membranes de fibres creuses (3) sont fixées dans au moins une tête de raccordement (9) qui est reliée avec un raccord d'aspiration (10) pour l'extraction de perméat hors des membranes de fibres creuses (3).

5. Dispositif de filtration selon la revendication 4, **caractérisé en ce que** les premières extrémités (4) de chaque membrane de fibres creuses (3) sont reliées à une première tête de raccordement (9) et les autres extrémités (4') des membranes de fibres creuses (3) sont reliées à une deuxième tête de raccordement (9').

6. Dispositif de filtration selon la revendication 4 ou 5, **caractérisé en ce que** la tête de raccordement (9, 9') et le raccord d'air comprimé (8) sont disposés sur des faces d'extrémité opposées du support (6).

7. Dispositif de filtration selon l'une des revendications 1 à 6, **caractérisé en ce que** plusieurs membranes de fibres creuses (3) sont réunies en un faisceau de fibres (2) de telle sorte que celui-ci possède une surface filtrante de 0,1 à 10 m², de préférence de 0,5 à 5 m².

8. Module de filtration (11), **caractérisé en ce qu'**il comprend plusieurs dispositifs de filtration (1) selon l'une des revendications 1 à 7, en particulier plusieurs dispositifs de filtration (1) disposés verticalement les uns à côté des autres avec le côté d'arrivée du gaz vers le bas.

9. Module de filtration selon la revendication 8, **caractérisé en ce que** les dispositifs de filtration (1) sont disposés de manière à former une surface filtrante de 50 à 700 m²/m³, en particulier de 100 à 400 m²/m³.

10. Module de filtration selon la revendication 8 ou 9, **caractérisé en ce que** les dispositifs de filtration (1) présentent une conduite commune d'arrivée (12) pour le gaz, de préférence de l'air comprimé, et/ou une conduite commune d'évacuation (13) pour le perméat.

11. Utilisation du dispositif de filtration (1) selon l'une des revendications 1 à 7 ou du module de filtration (11) selon l'une des revendications 8 à 10 pour le traitement d'eau ou d'eaux usées.

12. Procédé pour le traitement d'eau ou d'eaux usées, comprenant les étapes de :
introduction d'eau (22) contaminée par une matière biologiquement active dans un bassin de filtration (14), dans lequel est disposé au moins un dispositif de filtration (1), dans lequel la matière biologiquement active est séparée de l'eau au moyen de membranes de fibres creuses (3) réunies en un faisceau de fibres (2), qui sont parcourues par le liquide de l'extérieur vers l'intérieur, et
retrait de l'eau contaminée par la matière biologiquement active par au moins une des extrémités (4) des membranes de fibres creuses (3),
dans lequel l'au moins un dispositif de filtration (1) comprend un dispositif d'arrivée de gaz (5) avec un support (6) dont la surface de circonférence extérieure (7) est au moins partiellement perméable au gaz de l'intérieur vers l'extérieur,
le faisceau de fibres (2) est enroulé sur la surface de circonférence extérieure (7) du support (6),
le support (6) présente sur une face d'extrémité un raccord (8) à travers lequel du gaz est amené à l'intérieur du support (6), et
les dépôts formés sur les surfaces extérieures des membranes de fibres creuses (3) sont enlevés des membranes de fibres creuses (3) par soufflage de gaz à travers la surface de circonférence extérieure (7) du support (6).

13. Procédé selon la revendication 12, **caractérisé en ce que** le gaz est amené de façon discontinue.

14. Procédé selon l'une des revendications 12 ou 13, **caractérisé en ce que** le bassin de filtration (14) est précédé d'un contacteur (15) et au moins une partie de la matière biologiquement active séparée dans le bassin de filtration (14) est ramenée au contacteur (15).

15. Procédé selon la revendication 14, **caractérisé en ce que** la quantité ramenée du bassin de filtration (14) est de 5 à 300 % du volume, en particulier 10 à 100 % du volume de la quantité d'eaux brutes amenée par jour.

16. Procédé selon la revendication 14 ou 15, **caractérisé en ce que** le temps de séjour dans le contacteur (15) est de 2 à 120 minutes, en particulier de 20 à 90 minutes.

17. Procédé selon l'une des revendications 14 à 16, **caractérisé en ce que** dans le bassin du contacteur (15), dans lequel la matière biologiquement active est ramenée du bassin de filtration (14), le rapport entre la demande biochimique d'oxygène (DBO) des eaux usées brutes et les boues biologiques (BB) ramenées du bassin de filtration (14) est de 1 à 100 kg DBO/kg BB par jour, de préférence de 5 à 70 kg DBO/kg BB par jour.

18. Procédé selon la revendication 17, **caractérisé en ce que** l'on réduit le rapport entre la demande biochimique d'oxygène (DBO) et les boues biologiques (BB) dans le contacteur (15) jusqu'à une valeur telle qu'après le retour des eaux usées du contacteur (15) au bassin de filtration (14), il s'établisse dans le bassin de filtration (14) un rapport entre la demande biochimique d'oxygène (DBO) et les boues biologiques (BB) de 0,01 à 1 kg DBO/kg BB par jour, de préférence de 0,02 à 0,6 kg DBO/kg BB par jour.

19. Procédé selon l'une des revendications 14 à 18, **caractérisé en ce que** le contacteur (15) est partagé en au moins deux bassins de contact (18, 19) disposés l'un derrière l'autre, avec un sens d'écoulement d'un premier bassin de contact (18) à un dernier bassin de contact (19) monté directement en amont du bassin de filtration (14), l'entrée d'eaux usées brutes et le retour de matière biologiquement active s'effectuent du bassin de filtration (14) au premier bassin de contact (18) et les effluents du dernier bassin de contact (19) sone ramenés au bassin de filtration (14).

20. Procédé selon l'une des revendications 14 à 19, **caractérisé en ce que** la vitesse d'écoulement dans le contacteur (15) est réglée entre 1 et 60 m/heure, en particulier entre 10 et 40 m/heure.

21. Procédé selon l'une des revendications 14 à 20, **caractérisé en ce qu'**il est prévu dans le contacteur (15) des chicanes qui contrôlent le flux de liquide.

22. Procédé selon la revendication 21, **caractérisé en ce que** le contacteur (15) est conformé comme un réacteur à flux piston ou à tubes.

23. Bioréacteur à membrane (16) avec un bassin de filtration (14), dans lequel se trouve une unité de filtration à membrane, **caractérisé en ce que** l'unité de filtration à membrane se compose d'au moins un module de filtration (11) selon l'une des revendications 8 à 10 et **en ce que** le bassin de filtration (14) est précédé d'un contacteur (15) avec au moins un bassin de contact, dans lequel débouchent une arrivée (20) d'eaux usées brutes et une arrivée (21) de retour de matière biologiquement active provenant bassin de filtration (14).

24. Bioréacteur à membrane selon la revendication 23, **caractérisé en ce que** le contacteur (15) est partagé en au moins deux bassin de contact (18, 19) avec un sens d'écoulement d'un premier bassin de contact (18) à un dernier bassin de contact (19) monté immédiatement en amont du bassin de filtration (14), et l'arrivée (20) pour l'amenée d'eaux usées brutes et l'arrivée (21) pour le retour de matière biologiquement active provenant du bassin de filtration (14) débouchent dans le premier bassin de contact (18).

25. Bioréacteur à membrane selon la revendication 23 ou 24, **caractérisé en ce que** le contacteur (15) est dimensionné de telle manière que dans la zone où la matière biologiquement active est ramenée du bassin de filtration (14), le rapport entre la demande biochimique d'oxygène (DBO) des eaux usées brutes et les boues biologiques (BB) ramenées du bassin de filtration (14) s'établisse entre 1 et 100 kg DBO/kg BB par jour, de préférence entre 5 et 70 kg DBO/kg BB par jour.

26. Bioréacteur à membrane selon la revendication 24 ou 25, **caractérisé en ce que** le rapport entre la demande biochimique d'oxygène et les boues biologiques diminue du premier bassin de contact (18) au dernier bassin de contact (19).

27. Bioréacteur à membrane selon l'une des revendications 23 à 26, **caractérisé en ce que** le contacteur (15) est partagé en 2 à 20, en particulier en 3 à 12, bassins de contact.

28. Bioréacteur à membrane selon l'une des revendications 23 à 27, **caractérisé en ce que** le rapport entre la demande biochimique d'oxygène (DBO) et les boues biologiques (BB) dans le retour du contacteur (15) dans le bassin de filtration (14) a une valeur telle qu'il s'établit dans le bassin de filtration (14) un rapport entre la demande biochimique d'oxygène (DBO) et les boues biologiques (BB) de 0,01 à 1 kg DBO/kg BB par jour, de préférence de 0,02 à 0,6 kg DBO/kg BB par jour.

29. Bioréacteur à membrane selon l'une des revendications 23 à 28, **caractérisé en ce qu'**il est prévu dans le contacteur (15) des chicanes contrôlant l'écoulement du liquide.

30. Bioréacteur à membrane selon l'une des revendications 23 à 29, **caractérisé en ce qu'**il est prévu un dispositif d'aération pour le contacteur (15).
